Europäisches Patentamt

European Patent Office

Office européen des brevets

(11) Veröffentlichungsnummer : **0 019 233**
**B1**

(12) # EUROPÄISCHE PATENTSCHRIFT

(45) Veröffentlichungstag der Patentschrift :
22.06.83

(51) Int. Cl.³ : **A 01 D 69/00, A 01 D 35/262**

(21) Anmeldenummer : **80102571.9**

(22) Anmeldetag : **09.05.80**

(54) **Rasenmäher mit Antrieb durch einen Brennkraftmotor.**

(30) Priorität : **11.05.79 DE 2919068**

(43) Veröffentlichungstag der Anmeldung :
**26.11.80 Patentblatt 80/24**

(45) Bekanntmachung des Hinweises auf die Patenterteilung : **22.06.83 Patentblatt 83/25**

(84) Benannte Vertragsstaaten :
**AT BE CH FR LI NL**

(56) Entgegenhaltungen :
**WO A 79/00005**
**DE A 2 166 513**
**DE A 2 843 503**
**US A 2 985 992**
**US A 3 253 391**
**US A 3 871 159**
**US A 4 048 788**
**US A 4 141 439**

(73) Patentinhaber : **Wolf-Geräte GmbH**
**Gregor-Wolf-Strasse Postfach 860 und 880**
**D-5240 Betzdorf/Sieg (DE)**

(72) Erfinder : **Kolb, Walter**
**Martin-Luther-Strasse**
**D-5240 Betzdorf (DE)**
Erfinder : **Schütz, Eberhard**
**Betzdorferstrasse 92**
**D-5244 Daaden (DE)**

(74) Vertreter : **Wallach, Curt, Dipl.-Ing. et al**
**Postfach 920**
**D-8000 München 33 (DE)**

Rasenmäher mit Antrieb durch einen Brennkraftmotor

Die Erfindung bezieht sich auf einen Rasenmäher mit Antrieb durch einen Brennkraftmotor, dessen Motorwelle mit der den Messerbalken tragenden Messerwelle über eine durch Federn in die Bremsstellung überführbare Bremskupplung verbunden ist, die durch eine handbetätigte Stellvorrichtung entgegen der Kraft der Federn einkuppelbar ist, wobei die Bremskupplung eine von der Motorwelle getragene Kupplungsscheibe, eine hiermit reibungsschlüssig zusammenwirkende zweite Kupplungsscheibe drehfest und axial verschieblich auf der den Messerbalken tragenden Messerwelle und eine Bremsscheibe aufweist, die unterhalb der zweiten Kupplungsscheibe drehfest und axial verschiebbar auf der Messerwelle befestigt ist und mit einer drehfest mit dem Gehäuse verbundenen Bremsscheibe zusammenwirkt, wobei die axiale Verschiebung der zweiten Kupplungsscheibe durch ein drehfest gegenüber dem Gehäuse angeordnetes axial verschiebliches Bauteil bewirkt wird.

Ein derartiger Rasenmäher ist aus der US-A-38 71 159 bekannt. Derartige Rasenmäher haben den Vorteil, daß zum Zwecke der Stillsetzung der Messerwelle nicht jedes Mal der Motor abgeschaltet werden muß. Zwar kann bei derartigen mit einem Brennkraftmotor angetriebenen Rasenmäher auch ohne Bremskupplung die Stillsetzung der Messerwelle fast augenblicklich erfolgen, wenn man den Motor durch Ziehen der Kompression, d. h. Öffnen eines Ventils stillsetzt. Jedoch ist dann immer von neuem das Anlassen des Motors erforderlich, was zeitraubend ist und eine nicht unerhebliche Kraftanstrenung erfordert.

Bei der in der US-A-3871 159 beschriebenen Bremskupplung ist das die zweite Kupplungsscheibe verschiebende Bauteil als Schaltgabel ausgebildet, die mit Schaltrollen in die Umfangsringnut einer Schaltscheibe eingreift, die drehfest auf der Messerwelle sitzt und gegenüber dieser mit der zweiten Kupplungsscheibe und der rotierenden Bremsscheibe axial verschiebbar ist.

Die Schaltgabel ist um eine die Messerwelle senkrecht kreuzende Achse verschwenkbar, was zwangsläufig dazu führt, daß die Schaltrollen der Schaltgabel nicht nur die zum Zwecke der Schaltung erforderliche Bewegung parallel zur Achse der Messerwelle durchführen, sondern zusätzlich auch noch eine Bewegung quer zur Messerwellenachse. Dies führt dazu, daß die Schaltrollen, die je nach Schaltbetätigung auf der oberen oder unteren Nutflanke abrollen, aus ihrer bezüglich der Messerwellenachse diametralen Stellung verschoben werden, wodurch außer der Rollreibung noch eine Gleitreibung zustande kommt, die zu einem erhöhten Verschleiß führt. Dieser Verschleiß ist insbesondere auf der oberen Nutflanke zu erwarten, weil die Einkupplungskräfte etwa 10 mal so groß sein müssen wie die Bremskräfte, die durch die Feder ausgeübt werden und eine Stillsetzung nach ca. 3 sec bewirken.

Ausgehend von diesem Stand der Technik liegt der Erfindung die Aufgabe zugrunde, die Schaltbetätigung der Bremskupplung derart zu verbessern, daß unter weitgehendem Wegfall von Reibungsverschleißerscheinungen eine betriebssichere langzeitige Schaltung der Kupplung gewährleistet wird, wobei dem Sicherheitsbedürfnis durch schnelle Stillsetzung der Messerwelle beim Loslassen der Stellvorrichtung Rechnung getragen wird.

Gelöst wird die gestellte Aufgabe durch die folgenden Merkmale :
— Das die axiale Verschiebung der zweiten Kupplungsscheibe bewirkende axial verschiebliche Bauteil ist eine die drehfest mit dem Gehäuse verbundene Bremsscheibe bildende Schaltscheibe die von der Messerwelle vertikal durchsetzt wird und die zweite Kupplungsscheibe bezüglich vertikaler Kräfte drehbar unterstützt.
— Die drehfest mit dem Gehäuse verbundene Schaltscheibe wird unter Federkraft auf die darunter angeordnete drehfest mit der Messerwelle verbundene Bremsscheibe gepreßt.
— Die bezüglich dem Gehäuse drehfeste Verbindung und bezüglich der Messerwelle axiale Verschiebbarkeit der Schaltscheibe wird dadurch bewirkt, daß die Schaltscheibe von Zugstangen getragen wird, die sich achsparallel zur Messerwelle erstrecken und durch Bohrungen einer Gehäusegrundplatte axial verschieblich geführt sind, und ferner dadurch, daß auf die Zugstangen Schraubenfedern aufgezogen sind, die sich zwischen der Grundplatte und der Schaltscheibe abstützen und daß die Schaltscheibe über die Zugstangen durch eine Stellvorrichtung aushebbar ist.

Durch die Erfindung wird erreicht, daß zwischen der Unterseite der zweiten Kupplungsscheibe und der sie anhebenden Schaltscheibe ein Wälzlager angeordnet werden kann, welches lediglich einer Rollreibung ausgesetzt ist und deshalb äußerst geringe Verschleißerscheinungen aufweist. Durch die Schaltscheibe kann die Axialkraft über den gesamten Umfang der Nabe der zweiten Kupplungsscheibe angreifen, während im bekannten Fall die Schaltrollen nur an zwei gegenüberliegenden Seiten in der Umfangsnut wirksam werden können, was zu einer hohen Flächenpressung insbesondere im eingekuppelten Zustand führt.

Durch die Erfindung wird weiter erreicht, daß die für die Einkupplung erforderlichen hohen axialen Druckkräfte, die auf die zweite Kupplungsscheibe ausgeübt werden müssen, in optimaler Weise übertragen werden.

Weitere zweckmäßige Ausgestaltungen der hydraulischen bzw. mechanischen Stellvorrichtung der dargestellten Ausführungsbeispiele ergeben sich aus den Unteransprüchen 2 bis 10.

Nachstehend werden Ausführungsbeispiele der Erfindung anhand der Zeichnung beschrieben. In

**0 019 233**

der Zeichnung zeigen :

Figur 1 eine Seitenansicht eines erfindungsgemäß aufgebauten Rasenmähers mit hydraulisch betätigbarer Bremskupplung ;

Figur 2 einen Axialschnitt der Bremskupplung des Rasenmähers gemäß Fig. 1 mit Stellvorrichtung ;

Figur 3 eine mechanisch betätigbare Bremskupplung für einen Rasenmäher im Schnitt nach der Linie III-III gemäß Fig. 4 ;

Figur 4 eine Draufsicht der Kupplung nach Fig. 3 von oben mit mechanischer Stellvorrichtung ;

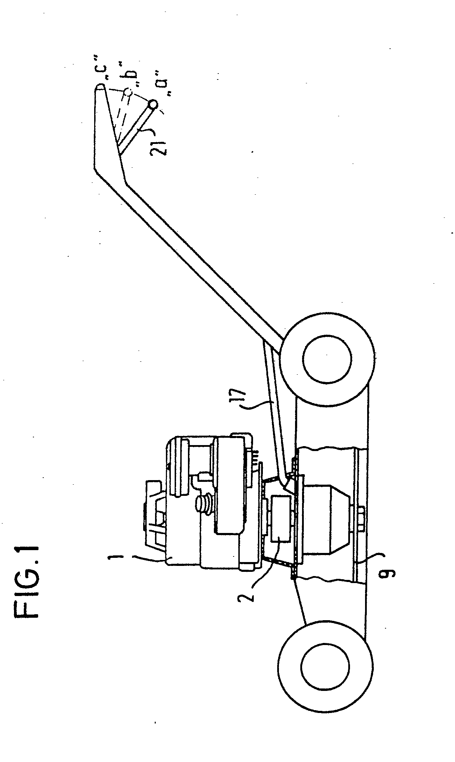

Das Chassis des in Fig. 1 dargestellten Rasenmähers trägt einen Antriebsmotor 1 in Gestalt einer Brennkraftmaschine, dessen Abtriebswelle über eine Steckkupplung 2 drehfest mit einem im Gehäuse gelagerten Wellenabschnitt verbunden ist, der eine Kupplungsscheibe 3 trägt. Diese Kupplungsscheibe 3 ist axial unverschiebbar und wirkt mit einer axial verschiebbaren zweiten Kupplungsscheibe 4 zusammen, die über eine Paßfeder 5 drehfest mit der Messerwelle 6a verbunden ist, die eine Bremsscheibe 6 trägt und auf der mittels einer Mutter 7 und einer Gegendruckscheibe 8 der Messerbalken 9 festgelegt ist. Auf der Messerwelle 6a ist eine Schaltscheibe 11 axial verschiebbar, die von Zugstangen 13 getragen wird, die in Bohrungen einer gehäusefesten Grundplatte 14 geführt und an einem Ringzylinder 15 verankert sind, der über der Grundplatte 14 innerhalb des Gehäuses axial beweglich gelagert ist. Zwischen der Grundplatte 14 und der Schaltscheibe 11 sind auf die Zugstangen 13 Druckschraubenfedern 10 aufgezogen, die die Schaltscheibe 11 nach unten zu drücken suchen, wodurch die Schaltscheibe 11 mit ihrem Reibungsbelag 12 gegen die Bremsscheibe 6 gedrückt wird. In einer den Ringzylinderraum bildenden Ringnut 15 ist ein Dichtungsring 16 eingelegt, welcher sich auf einem in die Ringnut einstehenden Ringkolben 14a der Grundplatte 14 abstützt. Die den Ringzylinder bildende Nut steht mit einem Leitungsanschluß 17a in Verbindung an den eine Druckleitung 17 angeschlossen ist, die nach der Stellvorrichtung 20 führt, die einen Stellhebel 21 aufweist.

Wenn der Ringzylinder über die Druckleitung 17 mit einem Hydraulikdruckmittel versorgt wird, dann wird er angehoben und über die Zugstangen 13 wird die Schaltscheibe 11 hoben, die ihrerseits die Kupplungsscheibe 4 auf der Messerwelle 6a nach oben verschiebt, wobei ihr Reibungsbelag mit der Kupplungsscheibe 3 in Eingriff gelangt, so daß die Messerwelle 6a mit der Motorabtriebswelle gekuppelt ist. Bei dieser Aufwärtsbewegung wird gleichzeitig der Reibungsbelag 12 der Schaltscheibe 11 von der Bremsscheibe 6 abgehoben, und zwar noch bevor der Reibungsbelag 18 mit der Kupplungsscheibe 3 in Eingriff kommt, so daß sich die Messerwelle 6a mit dem Messerbalken 9 frei drehen kann. Beim Abschalten des Drucks in der Leitung 17 erfolgt eine automatische Entkupplung und Bremsung, indem die Federn 10 die Schaltscheibe 11 nach unten drücken, wodurch die Kupplungsscheibe 4 von der Kupplungsscheibe 3 freikommt und die Schaltscheibe 11 mit ihrem Reibbelag 12 auf die Bremsscheibe 6 einwirkt und eine kurzzeitige Stillsetzung der Messerwelle 6a und des Messerbalkens 9 bewirkt.

Die Stellvorrichtung 20 weist einen axial verschieblichen Stellkolben 19 auf, der den erforderlichen hydraulischen Schaltdruck erzeugt. Der Aufbau der Stellvorrichtung ist ähnlich dem Hauptbremszylinder eines Kraftfahrzeuges aufgebaut. Verschoben wird der Stellkolben 19 nach innen durch einen Steuernocken 26, der den Kraftarm des Stellhebels 21 bildet, der aus der Bremsstellung a über eine Zwischenstellung b in die Einschaltstellung c überführbar ist. Beim Übergang von « a » nach « b » verdrängt der Kolben 19 Flüssigkeit, wobei das Verdrängungsvolumen so bemessen ist, daß nur etwa 50 % zum Füllen des Ringzylinders benötigt werden. Die restliche Flüssigkeitsmenge strömt durch einen Abzweigkanal 22 zu einem Druckspeicher, der einen in einem Zylinder laufenden Druckkolben 24 aufweist. Ein Ventilkörper 23 wird unter der Wirkung einer Druckschraubenfeder 25, die auf dem Kolben 24 lastet, auf seinen Sitz gedrückt und schließt den Abzweigkanal 22. Der Ventilkörper 23 ist über den Kolben 24 durch die Feder 25 derart vorgespannt, daß sich nur nach Füllen und Druckaufbau im Ringzylinder die restlichen ca. 50 % der Flüssigkeitsmenge eindrücken lassen. Danach ist in der Stellung b des Stellhebels 21 die Kupplung bereits eingerückt, und es steht eine Druckreserve von 50 % zur Verfügung, die wirksam werden kann, wenn der Reibungsbelag 18 abgenutzt ist. Bei Abnutzung dieser Reibbeläge verringert sich zwar die Druckreserve, bedingt durch die Charakteristik der Feder 25 bleibt jedoch der Druck, der das Einkuppeln bewirkt, nahezu konstant. Hierdurch wird eine Nachjustierung bei sich veränderndem Kupplungs-Bremsspiel entbehrlich. Der Stellhebel wird weiter von der Stellung « b » zur Endstellung « c » bewegt, wobei die Betätigungskraft durch die Gestaltung des Nockens 26 sehr klein gehalten werden kann. Der Kolben 19 verdrängt dann nur noch eine geringe Flüssigkeitsmenge zum Speicher, und die Bedienungsperson kann im Bewegungsbereich der Hand zwischen der Stellung « a » und « b » den Hebel bewegen, ohne daß eine Reibung zwischen der Kupplungsscheibe 3 und dem Reibungsbelag 18 eintritt. Der Stellhebel 21 ist als Bügel ausgebildet, der parallel zum Schiebegriff des Rasenmähers verläuft, so daß er mit der rechten oder linken Hand, aber auch mit beiden Händen betätigt werden kann.

Über Nachsaugbohrungen 27 steht ein Vorratsbehälter 28 mit dem Hydraulikkreis in Verbindung, wobei der Behälter durch einen geschlossenen Faltenbalg 30 staubdicht verschlossen ist.

Der Aufbau des Gerätes ist so ausgeführt, daß die hydraulische Betätigung außerhalb der eigentlichen Kupplung montiert ist, so daß die Erwärmung dieses Schaltteils sehr niedrig gehalten wird. Die Gestaltung der Grundplatte 14 hält eventuelle Leckflüssigkeit vom Kupplungsbelag 18 und Bremsbelag 12 fern.

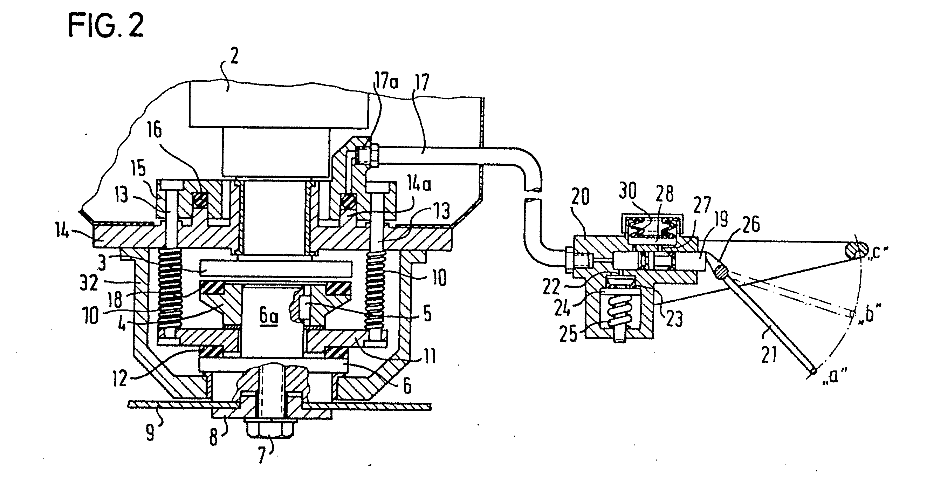

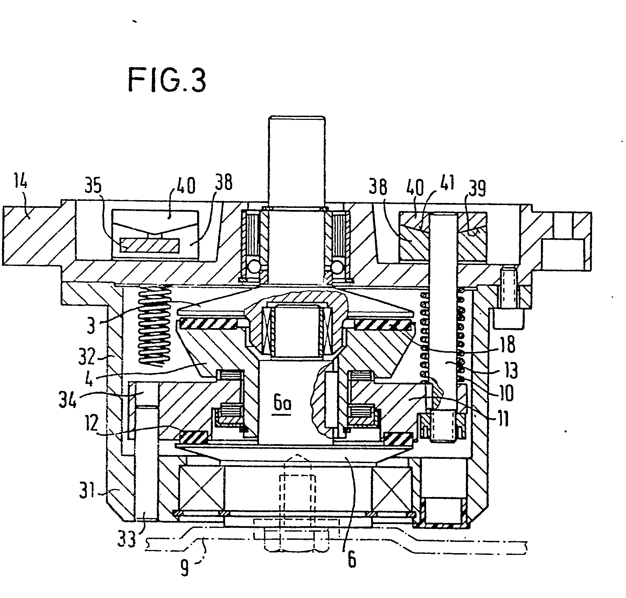

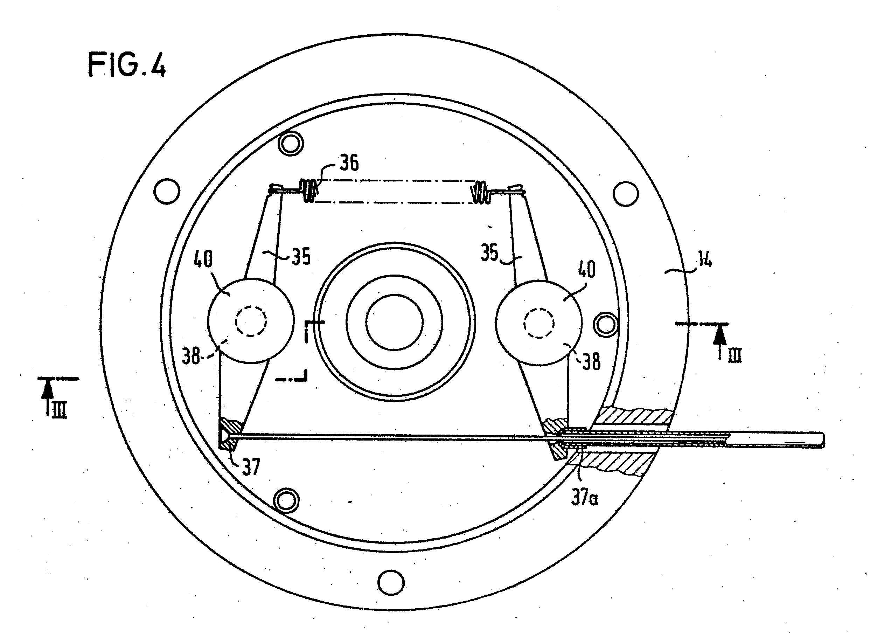

Die mechanisch betätigte Bremskupplung nach Fig. 3 und 4 entspricht grundsätzlich dem Kupplungsaufbau nach Fig. 2. Auch hier treibt die Motorabtriebswelle eine Kupplungsscheibe 3 an, die über eine mit Reibbelag 18 versehene Kupplungsscheibe 4 mit der den Messerbalken 9 tragenden Messerwelle 6a drehbar aber axial verschiebbar verbunden ist. Ebenso wie bei dem Ausführungsbeispiel nach Fig. 2 wird bei diesem Ausführungsbeispiel nach Fig. 3 und 4 die Schaltscheibe 11 durch den Druck der Schrauben federn 10 nach unten gedrückt und liegt mit ihrem Reibungsbelag 12 der Bremsscheibe 6 an, die mit der Messerwelle 6a fest verbunden ist. Im Gegensatz zu dem Ausführungsbeispiel nach Fig. 2 werden die Zugstangen 13 nicht hydraulisch, sondern mechanisch ausgehoben. Zur besseren Führung der Schaltscheibe 11 sind im Boden 31 des an der Grundplatte 14 befestigten Gehäuses 32 Führungsstangen 33 eingesetzt, die in Bohrungen 34 der Schaltscheibe 11 einstehen und diese axial führen. Zur Betätigung der Zugstangen 13 sind zwei doppelarmige Hebel 35 vorgesehen, deren eine Enden durch eine Zugfeder 36 verbunden sind, die die Hebel in die aus Fig. 3 und 4 ersichtliche Bremsstellung vorspannen. An den gegenüberliegenden Hebelarmen greift ein Bowdenzug an, und zwar an dem einen Hebelarm das Ende des Kabels 37 und am anderen Hebelarm das Ende der Umhüllung 37a, so daß bei Betätigung des Bowdenzuges an einem der Stellvorrichtung 20 nach Fig. 1 und 2 entsprechenden den Stellhebel die beiden Hebel synchron gegen die Wirkung der Feder 36 um ihre Schwenkachsen verdreht werden, die mit der Achse der Zugstangen 13 zusammenfällt. Die Schwenkhebel 35 tragen mit ihnen drehfest verbunden im Mittelabschnitt Lagerbuchsen 38, mit denen sie drehbar und axial verschieblich auf den Zugstangen 13 sitzen. Diese Lagerbuchsen 38 weisen eine V-förmige Wiege 39 an ihrer Oberseite auf, in die eine Stellbuchse 40 mit ihren einen gleichen Anstellwinkel aufweisenden Keilflächen 41 einpaßt, wenn sich die Teile in der aus Fig. 3 und 4 ersichtlichen Bremsstellung befinden. Diese Stellbuchsen 40 sind fest mit den Enden der Zugstangen 13 verbunden.

Wenn durch Betätigung des Bowdenzuges die beiden Hebelarme der Hebel 35, an denen der Bowdenzug ansetzt, gegen die Wirkung der Feder 36 aufeinander zu bewegt werden, dann drehen sich die Lagerbuchsen 38 um die Zugstangen 13 und über die schrägen Keil- bzw. Wiegeflächen 41 bzw. 39 werden die Stellbuchsen 40 und mit ihnen die Zugstangen 13 angehoben, so daß der Bremsbelag 12 der Schaltscheibe 11 von der Bremsscheibe 6 freikommt und danach eine Einkupplung zwischen dem Belag 18 der Kupplungsscheibe 4 und der Kupplungsscheibe 3 zustande kommt.

Bei den vorbeschriebenen Ausführungsbeispielen erfolgte die Betätigung der Kupplung durch eine mit Handgriff versehene Stellvorrichtung. Gemäß einer weiteren Ausgestaltung der Erfindung soll jedoch vorbehalten bleiben, daß zusätzlich oder anstelle der Stellbetätigung eine automatische Betätigung dann erfolgt, wenn ein an eine Auslaßöffnung des Mähers anschließender Fangkorb an- bzw. abgenommen wird. Wenn der Fangkorb bei laufendem Motor abgenommen wird besteht die Gefahr, daß die Bedienungsperson durch die Auslaßöffnung des Mäherchassis in das Innere greift und von den noch rotierenden Messern verletzt wird. Um dies zu verhindern ist vorgesehen, mechanisch mit der Befestigungsvorrichtung für den Fangkorb eine Vorrichtung zu kombinieren, die bewirkt, daß beim Abnehmen des Fangkorbes die Kupplung ausgerückt und die Bremse eingerückt wird, wobei nur bei angesetztem Fangkorb eine Einkupplung erfolgen kann. Bei dem Ausführungsbeispiel nach Fig. 1 und 2 kann dies auf einfache Weise durch ein weiteres Ventil in Reihe oder im Nebenschluß zu dem ersten Ventil bewirkt werden, und im zweiten Fall durch eine entsprechende mechanische Stellvorrichtung.

Die Stellvorrichtung mit der Kupplung ist mit dem Gashebel für die Brennkraftmaschine auf in der Zeichnung nicht dargestellter Weise derart verbunden, daß beim Ausrücken der Kupplung der Motor automatisch auf Leerlauf geschaltet wird. Ebenso ist zweckmäßigerweise eine Bewegungsverbindung in umgekehrter Richtung vorgesehen, um zu gewährleisten, daß beim Einrücken der Kupplung der Motor wieder auf Vollast geschaltet wird, so daß beim Einkuppeln die erforderliche Leistung zur Verfügung steht und ein Abwürgen des Motors verhindert ist.

**Ansprüche**

1. Rasenmäher mit Antrieb durch einen Brennkraftmotor, dessen Motorwelle mit der den Messerbalken (9) tragenden Messerwelle (6a) über eine durch Federn (10) in die Bremsstellung überführbare Bremskupplung verbunden ist, die durch eine handbetätigte Stellvorrichtung entgegen der Kraft der Federn (10) einkuppelbar ist, wobei die Bremskupplung eine von der Motorwelle getragene Kupplungsscheibe (3), eine hiermit reibungsschlüssig zusammenwirkende zweite Kupplungsscheibe (4) drehfest und axial verschieblich auf der den Messerbalken (9) tragenden Messerwelle (6a) und eine Bremsscheibe (6) aufweist, die unterhalb der zweiten Kupplungsscheibe (4) drehfest und axial verschiebbar auf der Messerwelle (6a) befestigt ist und mit einer drehfest mit dem Gehäuse verbundenen Bremsscheibe (11) zusammenwirkt, wobei die axiale Verschiebung der zweiten Kupplungsscheibe (4) durch ein drehfest gegenüber dem Gehäuse angeordnetes axial verschiebliches Bauteil (11) bewirkt wird, gekennzeichnet durch die folgenden Merkmale :

— Das die axiale Verschiebung der zweiten Kupplungsscheibe (4) bewirkende axial verschiebliche Bauteil ist eine die drehfest mit dem Gehäuse verbundene Bremsscheibe bildende Schaltscheibe (11), die von der Messerwelle (6a) vertikal durchsetzt wird und die zweite Kupplungsscheibe (4) bezüglich vertikaler Kräfte drehbar unterstützt.

— Die drehfest mit dem Gehäuse verbundene Schaltscheibe (11) wird unter Federkraft (10) auf die darunter angeordnete drehfest mit der Messerwelle (6a) verbundene Bremsscheibe (6) gepreßt.

— Die bezüglich dem Gehäuse drehfeste Verbindung und bezüglich der Messerwelle (6a) axiale Verschiebbarkeit der Schaltscheibe (11) wird dadurch bewirkt, daß die Schaltscheibe (11) von Zugstangen (13) getragen wird, die sich achsparallel zur Messerwelle (6a) erstrecken und durch Bohrungen einer Gehäusegrundplatte (14) axial verschieblich geführt sind, und ferner dadurch, daß auf die Zugstangen (13) Schraubenfedern (10) aufgezogen sind, die sich zwischen der Grundplatte (14) und der Schaltscheibe (11) abstützen und daß die Schaltscheibe (11) über die Zugstangen (13) durch eine Stellvorrichtung (20) aushebbar ist.

2. Rasenmäher nach Anspruch 1, dadurch gekennzeichnet, daß die an den Zugstangen (13) angreifende Stellvorrichtung (20) hydraulisch arbeitet.

3. Rasenmäher nach Anspruch 2, dadurch gekennzeichnet, daß die über die Grundplatte (14) vorstehenden Enden der Zugstangen (13) von einer Ringkolben-Ringzylinder-Anordnung (15, 14a) getragen werden, deren Ringzylinder (15) mit der mit Stellhebeln (21) versehenen Stellvorrichtung (20) über eine Druckleitung (17) verbunden ist.

4. Rasenmäher nach Anspruch 3, dadurch gekennzeichnet, daß der Ringzylinder (15) eine den Ringzylinderraum bildende Axialnut aufweist, in die ein den Ringkolben bildender Ringsteg (14a) der Grundplatte einsteht und in die eine Ringdichtung (16) eingelegt ist.

5. Rasenmäher nach den Ansprüchen 3 und 4, dadurch gekennzeichnet, daß die Stellvorrichtung einen über ein Ventil (23) mit der Druckleitung (17) verbundenen Druckmittelspeicher aufweist, der einen Druckkolben (24) besitzt, welcher durch eine Feder (25) in Schließstellung derart vorgespannt ist, daß eine Rückversetzung des Druckkolbens (24) erst dann erfolgen kann, wenn der die Zugstangen (13) aushebende Ringkolben (14a) in seine Endstellung überführt ist.

6. Rasenmäher nach Anspruch 5, dadurch gekennzeichnet, daß die Stellvorrichtung (20) einen Hydraulikvorratsbehälter (28) aufweist, der durch einen geschlossenen Faltbalg (30) abgeschlossen ist.

7. Rasenmäher nach den Ansprüchen 3 bis 6 dadurch gekennzeichnet, daß der Stellhebel (21) als Griffbügel ausgebildet ist, der parallel zum Schiebegriff des Rasenmähers verlaufend angeordnet ist und mit einem Steuernocken (26) auf einen Steuerschieber (19) der Stellvorrichtung einwirkt.

8. Rasenmäher nach den Ansprüchen 2 bis 7, dadurch gekennzeichnet, daß die Stellvorrichtung mir dem Anschluß eines Grasfangkorbes derart kombiniert ist, daß die Kupplung nur im angesetzten Zustand des Fangkorbes unter Lösen der Bremse einrückbar ist, und daß in die Druckleitung (17) oder eine Nebenschlußleitung hierzu ein Ventil eingeschaltet ist, welches von einer Anschlußvorrichtung des Grasfangbehälters betätigbar ist.

9. Rasenmäher nach Anspruch 1, dadurch gekennzeichnet, daß die Zugstangen (13) über ein Keilschubgetriebe (38, 39, 40, 41) aushebbar sind, das auf die Zugstangen (13) über der Grundplatte (14) aufgesetzte Lagerbuchsen (38) aufweist, die mit Hebeln (35) verbunden sind, welche in einer Richtung vorgespannt und in der Gegenrichtung durch einen mit der Stellvorrichtung verbundenen Bowdenzug bewegbar sind, und daß an den Enden der Zugstangen über den Lagerbuchsen (38) Stellbuchsen (40) fixiert sind, die mit Keilflächen (41) ausgestattet sind, welche mit entsprechend geneigten Oberflächen (39) der Lagerbuchsen (38) zusammenwirken.

10. Rasenmäher nach Anspruch 9, dadurch gekennzeichnet, daß die Lasthebel Arme der Hebel (35) durch eine Zugfeder (36) gegeneinander vorgespannt sind, und daß an den Kraftarmen der Hebel (35) der Bowdenzug mit seinem Kabel (27) bzw. seiner Hülle (37a) ansetzt.

**Claims**

1. A lawnmower driven by an internal combustion engine the motor shaft of which is connected with the blade shaft (6a) which carries the blade beam (9) via a brake coupling which can be moved to the braking position by springs (10), with the brake coupling being capable of being coupled in against the force of the springs by a manually actuated positioning device, wherein the brake coupling comprises a coupling disc (3) carried by the motor shaft, a second coupling disc (4) frictionally cooperating with the first coupling disc and rotationally fixed and axially displaceable on the blade shaft (6a) carrying the blade beam (9), and a brake disc (6) which is secured beneath the second coupling disc (4) rotationally fixed and axially displaceable on the blade shaft (6a) and which cooperates with a brake disc (11) rotationally fixed to the housing, with the axial displacement of the second coupling disc (4) being brought about by an axially displaceable component (11) which is rotationally fixedly arranged relative to the housing, characterised by the following features :

— The axially displaceable component which brings about the axial displacement of the second coupling disc (4) is a switching disc (11) which forms the brake disc rotationally fixedly connected to the housing, with the blade shaft (6a) passing vertically through the switching disc and the switching disc rotatably bracing the second coupling disc (4) with regard to vertical forces.

— The switching disc (11) which is rotationally fixed to the housing is pressed by spring force (10) onto the brake disc (6) which is rotationally fixedly connected with the blade shaft (6a) and arranged beneath the switching disc.

— The rotationally fixed connection of the switching disc (11) relative to the housing and the axial displaceability of the switching disc (11) relative to the blade shaft (6a) are brought about by the switching disc (11) being carried by pull rods (13) which extend axially parallel to the blade shaft (6a) and are axially displaceably guided through bores of a housing base plate (14) and, furthermore, by coil springs (10) drawn over the pull rods (13) with the coil springs being braced between the base plate (14) and the switching disc (11) and by the switching disc (11) being liftable via the pull rods (13) by a positioning device (20).

2. A lawnmower in accordance with claim 1, characterised in that the positioning device (20) acting on the pull rods (13) works hydraulically.

3. A lawnmower in accordance with claim 2, characterised in that the ends of the pull rods (13) which project beyond the base plate (14) are carried by an annular piston-annular cylinder arrangement (15, 14a) the annular cylinder of which is connected with the positioning device (20), which is provided with positioning levers (21) via a pressure line (17).

4. A lawnmower in accordance with claim 3, characterised in that the annular cylinder (15) has an axial groove forming the annular cylinder chamber with an annular web (14a) of the base plate which forms the annular piston projecting into the axial groove and with an annular seal (16) inserted in the axial groove.

5. A lawnmower in accordance with the claims 3 and 4, characterised in that the positioning device has a pressure medium reservoir connected to the pressure line (17) via a valve (23), with the reservoir having a pressure piston (24) which is biased by a spring (25) into a closed position such that a rearward displacement of the pressure piston (24) can only occur when the annular piston (14a) which lifts the pull rods (13) has been moved into its end position.

6. A lawnmower in accordance with claim 5, characterised in that the positioning device (20) has a hydraulic supply container (28) which is closed by a closed bellows-like bag (30).

7. A lawnmower in accordance with claims 3 to 6, characterised in that the positioning device (21) is constructed as a grip handle which extends parallel to the handle of the lawnmower and acts on a control slider (19) of the positioning device by means of a cam nose (26).

8. A lawnmower in accordance with the claims 2 to 7, characterised in that the positioning device is combined with the connection for a grass-box in such a way that the coupling can only be engaged with release of the brake when the grass-box is connected, and in that a valve is inserted in the pressure line (17) or in a bypass line thereto with the valve being actuatable by a connection device of the grass-box.

9. A lawnmower in accordance with claim 7, characterised in that the pull rods (13) can be lifted via a wedge thrust transmission (38, 39, 40, 41) which has bearing sleeves (38) mounted on the pull rods above the base plate (14), with the bearing sleeves being connected to levers (35) which are biased in one direction and movable in the counter direction by a Bowden cable connected to the positioning device, and in that positioning sleeves (40) are fixed to the ends of the pull rods via the bearing sleeves (38), with the positioning sleeves being equipped with wedge faces (41) which cooperate with correspondingly inclined surfaces (39) of the bearing sleeves (38).

10. A lawnmower in accordance with claim 9, characterised in that the load lever arms of the levers (35) are biased against one another by a tension spring (36) and in that the cable (27) and sleeve (37a) of the Bowden cable respectively act on the fore arms of the levers (35).

## Revendications

1. Tondeuse à gazon commandée par un moteur à combustion interne dont l'arbre est relié à l'arbre de coupe (6a), portant la barre de coupe (9), par un accouplement de freinage pouvant être amené à la position de freinage par des ressorts (10), accouplement de freinage qui peut être accouplé au moyen d'un dispositif de réglage actionné à la main, à l'encontre de la force des ressorts (10), l'accouplement de freinage comportant un disque d'accouplement (3) porté par l'arbre du moteur, un second disque d'accouplement (4) coopérant avec le premier disque par contact à frottement, sans possibilité de rotation et avec mobilité dans le sens axial sur l'arbre de coupe (6a), portant la barre de coupe (9), et un disque de frein (6) qui est fixé en dessous du second disque d'accouplement (4) sans possibilité de rotation et avec mobilité dans le sens axial sur l'arbre de coupe (6a) et qui coopère avec un disque de frein (11) relié sans possibilité de rotation au carter, le déplacement axial du second disque d'accouplement (4) étant déterminé par un élément de construction (11) mobile dans le sens axial qui est monté sans possibilité de rotation par rapport au carter, la tondeuse à gazon présentant les caractéristiques de réalisation qui sont énoncées ci-après :

— L'élément de construction mobile dans le sens axial qui détermine le déplacement axial du second disque d'accouplement (4) est un disque de commande (11) qui constitue le disque de frein relié sans possibilité de rotation du carter, disque de commande qui est traversé verticalement par l'arbre de coupe (6a) et qui favorise les efforts verticaux du second disque d'accouplement (4), qui peut tourner.

— Le disque de commande (11), qui est relié sans possibilité de rotation au carter, est, sous la force des ressorts (10), pressé sur le disque de frein (6) prévu en dessous de lui, qui est relié sans possibilité de rotation à l'arbre de coupe (6a).

— La liaison sans possibilité de rotation du disque de commande (11) par rapport au carter et la possibilité de déplacement de ce disque de commande (11) dans le sens axial par rapport à l'arbre de coupe (6a) sont déterminées par le fait que le disque de commande (11) est porté par des tringles de traction (13) dont les axes sont parallèles à l'axe de l'arbre de coupe (6a) et qui sont guidées dans des passages d'une plaque de base (14) du carter de façon à pouvoir s'y déplacer dans le sens axial et, en outre, par le fait que sur les tringles de traction (13) sont montés des ressorts hélicoïdaux (10) qui prennent appui entre la plaque de base (14) et le disque de commande (11) et par le fait que le disque de commande (11) peut être soulevé par un dispositif de réglage (20) par l'intermédiaire des tringles de traction (13).

2. Tondeuse à gazon suivant la revendication 1, caractérisée en ce que le dispositif de réglage (20) qui attaque les tringles de traction (13) fonctionne hydrauliquement.

3. Tondeuse à gazon suivant la revendication 2, caractérisé en ce que les extrémités des tringles de traction (13) qui font saillie au-dessus de la plaque de base (14) sont portées par un dispositif à piston annulaire et à cylindre annulaire (15, 14a) dont le cylindre annulaire (15) est relié par un conduit sous pression (17) au dispositif de réglage (20), qui est muni d'un levier de réglage (21).

4. Tondeuse à gazon suivant la revendication 3, caractérisé en ce que le cylindre annulaire (15) présente une rainure axiale qui en forme la chambre, rainure annulaire dans laquelle s'engage une nervure annulaire (14a) de la plaque de base, nervure annulaire qui forme le piston annulaire, une bague d'étanchéité (16) étant placée dans la rainure axiale.

5. Tondeuse à gazon suivant les revendications 3 et 4, caractérisée en ce que le dispositif de réglage comporte un réservoir d'agent sous pression relié par une valve (23) au conduit sous pression (17), réservoir d'agent sous pression qui est muni d'un piston de compression (24), lequel est sollicité dans la position de fermeture par un ressort (25) qui le soumet à une tension préalable, de telle sorte qu'un recul du piston de compression (24) ne puisse avoir lieu que lorsque le piston annulaire (14a) qui soulève les tringles de traction (13) a été ramené à la position extrême.

6. Tondeuse à gazon suivant la revendication 5, caractérisée en ce que le dispositif de réglage (20) comporte un réservoir d'emmagasinage hydraulique (28), qui est fermé par un soufflet à plis fermé (30).

7. Tondeuse à gazon suivant les revendications 3 à 6, caractérisée en ce que le levier de réglage (21) se présente sous la forme d'un étrier de préhension qui est prévu de façon à suivre une direction parallèle à celle de la poignée au moyen de laquelle on pousse la tondeuse à gazon et qui agit par une came de commande (26) sur un piston de commande (19) du dispositif de réglage.

8. Tondeuse à gazon suivant les revendications 2 à 7, caractérisée en ce que le dispositif de réglage est combiné au raccord d'un récipient collecteur de gazon de telle façon que l'accouplement ne puisse être accouplé que lorsque le réservoir collecteur est en place, le frein étant desserré, et en ce que dans le conduit sous pression (17), ou dans un conduit en dérivation de celui-ci, est à cet effet montée une valve qui peut être actionnée par un dispositif de raccordement du récipient collecteur de gazon.

9. Tondeuse à gazon suivant la revendication 1, caractérisée en ce que les tringles de traction (13) peuvent être soulevées à l'intervention d'un mécanisme de poussée à coins (38, 39, 40, 41) qui comporte des coussinets (38) montés sur les tringles de traction (13) au-dessus de la plaque de base (14) et reliés à des leviers (35) qui sont soumis à une tension préalable dans un sens et qui peuvent être déplacés dans le sens opposé par un câble Bowden relié au dispositif de réglage, et en ce qu'aux extrémités des tringles de traction sont fixés, au-dessus des coussinets (38) ; des coussinets de réglage (40) présentant des faces en coin (41) qui coopèrent avec des faces inclinées de façon correspondante (39) des coussinets (38).

10. Tondeuse à gazon suivant la revendication 9, caractérisée en ce que les bras de charge des leviers (35) sont sollicités l'un vers l'autre par un ressort de traction (36) qui les soumet à une tension préalable, et en ce que le câble Bowden agit, respectivement par son câble (27) et par sa gaine (37a), sur les bras de puissance des leviers (35).

FIG.1

# FIG. 2

# FIG.3

FIG.4